# EUROPEAN PATENT APPLICATION

(11) **EP 4 307 802 A1**
(43) Date of publication of application: **17.01.2024**
(21) Application number: 22766261.6
(22) Date of filing: 07.03.2022
(51) Int. Cl.: H04W 72/04

(54) **UPLINK TRANSMISSION METHOD AND APPARATUS, AND TERMINAL**

(30) Priority: 12.03.2021 CN 202110269812
(71) Applicant: Vivo Mobile Communication Co., Ltd., Dongguan, Guangdong 523863 (CN)
(72) Inventor: LI, Na, Dongguan, Guangdong 523863 (CN); WU, Kai, Dongguan, Guangdong 523863 (CN); RAKESH, Tamrakar, Dongguan, Guangdong 523863 (CN)
(74) Representative: Lavoix
(86) International application number: PCT/CN2022/079510
(87) International publication number: WO 2022/188737

(57) **Abstract**

This application discloses an uplink transmission method and apparatus, and a terminal, and pertains to the field of mobile communication. The method includes: determining an available or valid or nominal first slot for uplink transmission before the 1st symbol of uplink transmission is sent; and determining an actual transmission behavior in the first slot.

## Description

### CROSS-REFERENCE TO RELATED APPLICATIONS

The present invention claims priority to Chinese Patent Application No. 202110269812.6, filed with the China National Intellectual Property Administration on March 12, 2021 and entitled "UPLINK TRANSMISSION METHOD AND APPARATUS, AND TERMINAL", which is incorporated herein by reference in its entirety.

### TECHNICAL FIELD

This application pertains to the field of mobile communication technologies, and specifically, relates to an uplink transmission method and apparatus, and a terminal.

### BACKGROUND

In the communication process of the 5th generation mobile communication technology (5^{th} Generation Mobile Communication Technology, 5G), the maximum number of repetitions for the physical uplink shared channel (Physical Uplink Shared Channel, PUSCH) is 16. In the time division duplex (Time Division Duplex, TDD) mode, the carrier configuration dominated by downlink slots results in very limited uplink slots. As a result, the actual number of repetitions of a PUSCH is much less than the configured number, leading to its limited coverage. Furthermore, for PUSCH repetition type A, it is required that each slot carrying PUSCH transmissions has the same time domain resources. This leads to the abandonment of PUSCH transmission in certain slots that do not have the same time domain resource allocation, even though these slots still have a certain number of uplink symbols. This also contributes to its limited coverage. In addition, under invalid symbol pattern (InvalidSymbolPattern), this is applicable to only PUSCH repetition type B, but not Repetition Type A or TB processing over multi-slots (TB Processing Over Multi-slots, TBoMS), which will cause PUSCHs with resource conflicts to be dropped to protect other transmissions or perform other physical procedures.

It can be seen that due to the abandonment of a large number of slot resources, the efficiency of uplink transmission is low.

### SUMMARY

Embodiments of this application provide an uplink transmission method and apparatus, and a terminal, to resolve the problem of low uplink transmission efficiency.

According to a first aspect, an uplink transmission method is provided, performed by a terminal and including:
determining an available or valid or nominal first slot for uplink transmission before the 1st symbol of uplink transmission is sent; and
determining an actual transmission behavior in the first slot.

According to a second aspect, an uplink transmission apparatus is provided. The apparatus includes:
a determining module, configured to determine an available or valid or nominal first slot for uplink transmission before the 1st symbol of uplink transmission is sent; and
a transmission module, configured to determine an actual transmission behavior in the first slot.

According to a third aspect, a terminal is provided. The terminal includes a processor, a memory, and a program or instructions stored in the memory and capable of running on the processor, and when the program or instructions are executed by the processor, the steps of the method according to the first aspect are implemented.

According to a fourth aspect, a readable storage medium is provided, where the readable storage medium stores a program or instructions, and when the program or instructions are executed by a processor, the steps of the method according to the first aspect are implemented.

According to a fifth aspect, a chip is provided. The chip includes a processor and a communication interface. The communication interface is coupled to the processor, and the processor is configured to run a program or instructions on a network-side device so as to implement the method according to the first aspect.

In the embodiments of this application, determining an available or valid or nominal first slot for uplink transmission and then determining an actual transmission behavior in the first slot can effectively improve the efficiency of uplink transmission.

### BRIEF DESCRIPTION OF DRAWINGS

FIG. 1 is a schematic structural diagram of a wireless communication system to which embodiments of this application are applicable;
FIG. 2 is a schematic flowchart of an uplink transmission method according to an embodiment of this application;
FIG. 3 is another schematic flowchart of an uplink transmission method according to an embodiment of this application;
FIG. 4 is a schematic diagram of a slot scheduling scheme according to an embodiment of this application;
FIG. 5 is a schematic diagram of another slot scheduling scheme according to an embodiment of this application;
FIG. 6 is another schematic flowchart of an uplink transmission method according to an embodiment of this application;
FIG. 7 is a schematic diagram of another slot scheduling scheme according to an embodiment of this application;
FIG. 8 is a schematic structural diagram of an uplink transmission apparatus according to an embodiment of this application;
FIG. 9 is a schematic structural diagram of a communication device according to an embodiment of this application; and
FIG. 10 is a schematic structural diagram of a terminal for implementing the embodiments of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It is worth noting that the technologies described in the embodiments of this application are not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, in the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communication system.

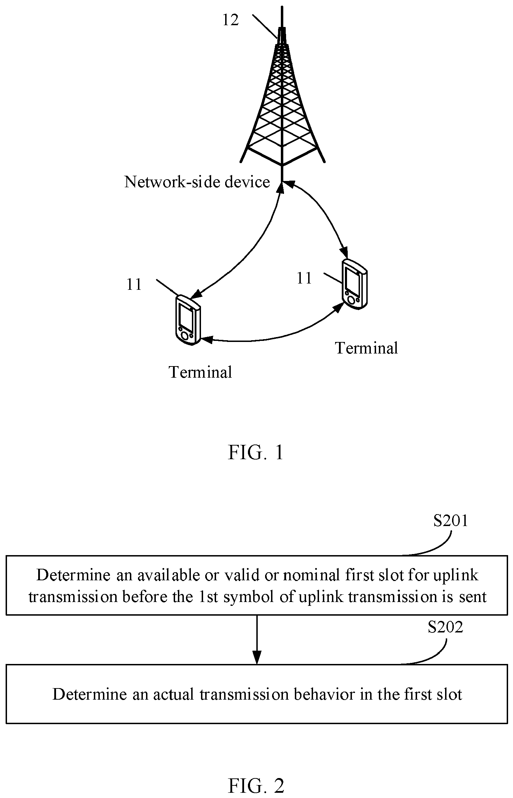

FIG. 1 is a schematic structural diagram of a wireless communication system to which the embodiments of this application are applicable. The wireless communication system includes a terminal 11 and a network-side device 12. The terminal 11 may also be referred to as a terminal device or user equipment (User Equipment, UE). The terminal 11 may be a terminal-side device, such as a mobile phone, a tablet personal computer (Tablet Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicular user equipment (VUE), or pedestrian user equipment (PUE). The wearable device includes a wrist band, earphones, glasses, and the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a wireless local area network (Wireless Local Area Network, WLAN) access point, a Wi-Fi node, a transmission reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example, although the specific type of the base station is not limited.

The following describes in detail an uplink transmission method provided in the embodiments of this application by using specific embodiments and application scenarios thereof with reference to the accompanying drawings.

FIG. 2 is a schematic flowchart of an uplink transmission method according to this application; The method may be performed by a terminal. In other words, the method may be performed by software or hardware installed on the terminal. As shown in FIG. 2, the method may include the following steps.

Step S201: Determine an available or valid or nominal first slot for uplink transmission before the 1st symbol of uplink transmission is sent.

It should be understood that the uplink transmission may include physical uplink shared channel (Physical Uplink Shared Channel, PUSCH) transmission and physical uplink control channel transmission. Specifically, it may include PUSCH transmission indicated by time domain resource allocation (Time domain resource allocation, TDRA). The first slot may be a slot or a sub-slot.

Step S202: Determine an actual transmission behavior in the first slot.

Before performing uplink transmission, the terminal first determines whether each first slot for uplink transmission is an available or valid or nominal first slot. Once the available or valid or nominal first slot is determined, an actual transmission behavior of this uplink transmission in the first slot is then determined, that is, how to perform this uplink transmission in the first slot is determined, for example, performing rate-matching (Rate-Matching) uplink transmission in the first symbols, performing uplink transmission after the first symbols are removed or punctured, performing uplink transmission in the first symbols after the uplink transmission is segmented, or abandoning uplink transmission in the first slot.

Therefore, an uplink transmission method provided in this embodiment of this application, by determining an available or valid or nominal first slot for uplink transmission and then determining an actual transmission behavior in the first slot, can effectively improve the efficiency of uplink transmission.

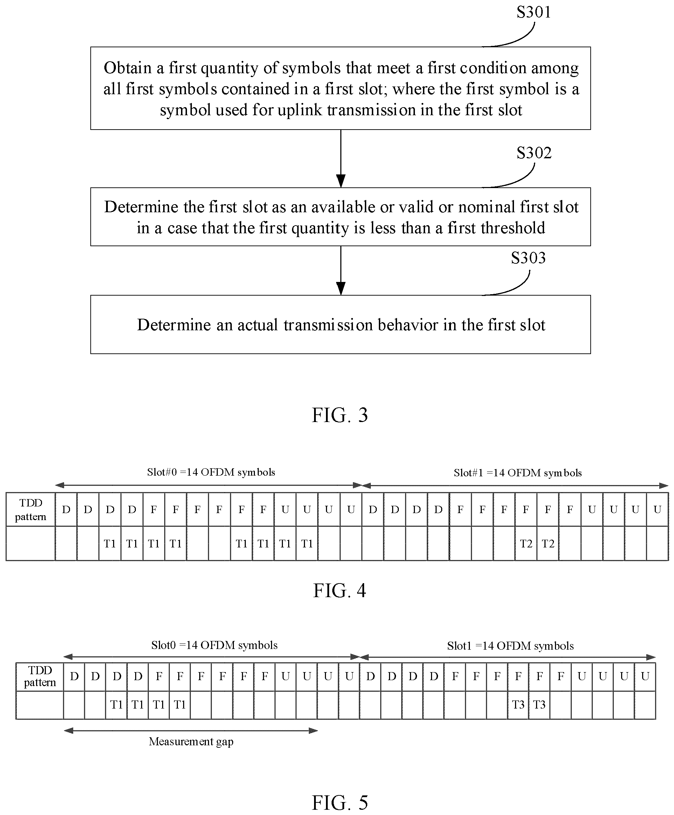

FIG. 3 is another schematic flowchart of an uplink transmission method according to an embodiment of this application. As shown in FIG. 3, the method may include the following steps.

Step S301: Obtain a first quantity of symbols that meet a first condition among all first symbols contained in the first slot; where the first symbol is a symbol used for uplink transmission in the first slot. The meeting of the first condition makes the first symbols invalid symbol resources for the PUSCH or physical uplink control channel (Physical Uplink Control Channel, PUCCH) of the current uplink transmission.

Further, the first symbol includes at least one of the following:
symbol for PUSCH transmission as indicated by TDRA;
symbol for uplink transmission as indicated by higher-layer configuration; where the higher-layer configuration is specifically configured through a radio resource control (Radio Resource Control, RRC) message or a system information block (System Information Block, SIB) message; and
symbol for PUCCH transmission as indicated by physical uplink control channel resource indicator (Physical Uplink Control Channel Resource Indicator, PRI) information.

Further, the first condition includes at least one of the following:
(1) configured as a semi-static downlink symbol (semi-static DL);
(2) configured as a synchronization signal block (Synchronization Signal and PBCH block, SSB);
(3) used for a control resource set (Control resource set, CORESET) for type 0 physical downlink control channel common search space (Type0-PDCCH CSS);
(4) configured as a semi-static flexible (semi-static flexible) symbol;
(5) being a symbol that is unavailable or invalid for uplink transmission according to higher-layer configuration;
(6) being a symbol unusable for current uplink transmission as indicated by dynamic signaling or higher-layer configuration;
(7) current physical uplink shared transmission being interrupted due to a first factor; and
(8) current uplink transmission being canceled according to a half-duplex rule.

Further, the semi-static downlink symbols include semi-static downlink symbols configured by tdd-LTL-DL-ConfigurationCommon information and/or tdd-LTL-DL-ConfigurationDedicated information.

Further, the SSB includes SSB configured by ssb-PositionsInBurst in the system information block SIB1 or by ssb-PositionsInBurst in ServingCellConfigCommon.

Further, the control resource set for Type0-PDCCH CSS includes the control resource set for Type0-PDCCH CSS as configured by pdcch-ConfigSIB 1 in the master information block (Master Information Block, MIB).

Further, the semi-static flexible symbols include semi-static flexible symbols configured by tdd-LTL-DL-ConfigurationCommon information and/or tdd-LTL-DL-ConfigurationDedicated information.

Further, the symbol unavailable or invalid for uplink transmission includes symbols that are configured as unavailable or invalid for uplink transmission by InvalidSymbolPattern, including symbols that are unavailable or invalid for PUSCH transmission.

Further, the symbol unusable for current uplink transmission as indicated by dynamic signaling or higher-layer configuration include at least one of the following:
used for scheduling downlink (DownLink, DL) symbol(s);
used for scheduling dynamic flexible (dynamic flexible) symbol(s);
used for scheduling downlink transmission;
used for scheduling repetition of other uplink transmission;
used for scheduling multi-slot transmission of other uplink transmission, where the anmulti-slot transmission of other uplink transmission is TBoMS; and
being an unavailable or invalid symbol.

Further, the symbol unusable for current uplink transmission is indicated by at least one of the following:
dynamic slot format indication (dynamic Slot Format Indication, dynamic SFI); where the dynamic slot format indication is used to indicate that the first symbol is DL and/or dynamic flexible;
downlink control information (Downlink Control Information, DCI); where the DCI is used to indicate that the first symbol is used for scheduling downlink transmission, higher-priority uplink transmission, repetition of other uplink transmission, or multi-slot transmission of other uplink transmission, or is an unavailable or invalid symbol, meaning the resource occupied by repetition overlaps with the first symbol;
higher-layer configuration; where the higher-layer configuration is used to configure the first symbol to be used for repetition of other uplink transmission or multi-slot transmission of other uplink transmission; and
uplink cancellation indication (LTL Cancellation indication, LTL CI).

Further, the repetition of other uplink transmission includes at least one of the following:
physical uplink control channel repetition (PUCCH repetition); where the physical uplink control channel includes: physical uplink control channel for channel state information and/or scheduling request and/or hybrid automatic repeat request;
repetition of target information; where the target message includes Msg3 and/or MsgA repetition; and
repetition of uplink transmission with higher priority than current uplink transmission.

Further, the first factor that can interrupt the current uplink transmission of the first symbols includes at least one of the following:
a time resource with a scheduling restriction caused by a first measurement; where, the first measurement is used for at least one of the following: radio link monitoring (Radio Link Monitoring, RLM), link recovery (link recovery), radio resource management (Radio resource management, RRM), and L1 layer reference signal received power (Reference Signal Received Power, RSRP). Specifically, the time resource with a scheduling restriction caused by a first measurement includes a symbol for SSB channel state information reference signal (Channel State Information Reference Signal, CSI-RS) transmission, or a plurality of symbols before and after this symbol;
switching or transition period between uplink and downlink transmission, that is, the switching or transition period from DL to UL or from LTL to DL.
radio frequency retuning time (RF retuning) between a same or different uplink transmissions, where the same or different uplink transmissions refer to transmissions with the same or different content and/or the same or different channels or reference signals;
bandwidth part (Bandwidth Part, BWP) switching of a current cell or another cell, activation of a secondary cell (Scell), deactivation of a secondary cell, addition of a secondary cell, and release of a secondary cell;
transition between non-discontinuous reception (Non-DRX) and discontinuous reception (DRX) in another serving cell (serving cell), that is, a transition from Non-DRX to DRX or from DRX to Non-DRX has occurred in another serving cell; and
measurement gap.

Further, the radio frequency retuning time between a same or different uplink transmissions is used for at least one of the following:
a change in spatial relation of uplink transmissions in different slots; and
frequency hopping transmission performed by a terminal with limited bandwidth on a bandwidth beyond its maximum bandwidth.

Further, the half-duplex rule that can cancel the current uplink transmission in the first condition includes at least one of the following:
terminal behavior under time division duplex half-duplex carrier aggregation (TDD Half-duplex CA); and
terminal behavior under half-duplex frequency division duplex (Half-duplex FDD) for reduced capability devices (Reduced Capability devices, RedCap).

For different uplink transmissions, the corresponding first condition can be selected from the foregoing first conditions. Based on the corresponding first condition, it can be determined whether each first symbol is an invalid symbol resource, and then it can be determined whether the first slot is an available or valid or nominal first slot. The first condition is determined based on at least one of the following:
classification of physical uplink shared channel;
format of physical uplink control channel; and
uplink control information (Uplink Control Information, UCI) carried by physical uplink control channel.

For PUSCH transmissions, different first conditions may be used based on different classifications of PUSCH. For PUCCH transmissions, different first conditions may be used based on the PUCCH format and/or different UCIs carried by PUCCH. Specific examples are as follows:

For a dynamically scheduled PUSCH, its corresponding first condition includes the above conditions (1), (2), (5), (7), and (8);

For a dynamic scheduling PUCCH, for example, a PUCCH carrying a downlink hybrid automatic repeat request acknowledgement (Hybrid automatic repeat request acknowledgement, HARQ-ACK) for dynamic scheduling, the corresponding first condition includes the foregoing conditions (1), (2), (5), (7), and (8).

For UE in the RRC-connected state and its configured grant PUSCH (Configured Grant PUSCH, CG PUSCH), the corresponding first condition includes the foregoing conditions (1), (2), (3), (5), (6), (7), and (8).

For UE in the RRC-connected (RRC-connected) state and its semi-statically configured PUCCH transmission, such as scheduling request (Scheduling Request, SR), persistent channel state information (Persistent Channel State Information, P-CSI), semi-persistent channel state information (Semi-Persistent CSI, SP-CSI), and the like, the corresponding first condition includes the foregoing conditions (1), (2), (3), (5), (6), (7), and (8).

For UE in the RRC-idle/inactive state and its configured grant PUSCH, the corresponding first condition includes the foregoing conditions (1), (2), (3), (7), and (8).

For a MsgA PUSCH message, the corresponding first condition includes the foregoing conditions (1), (2), and (8).

Step S302: Determine the first slot as an available or valid or nominal first slot in a case that the first quantity is less than a first threshold X.

Further, the first threshold X is determined by at least one of the following:
higher-layer configuration, including RRC and SIB;
dynamic indication;
transmission length in TDRA;
transmission length of physical uplink control channel;
transmission length of uplink transmission;
configuration by time domain resource allocation;
configuration by radio resource control information;
the first slot being a slot without uplink/downlink switching;
the first slot being a slot with uplink/downlink switching; and
a coding rate R specified by higher-layer configuration and/or protocol, where if the coding rate of the currently transmitted data on L-X symbols is greater than R, then the slot is unavailable.

Determining the first threshold X based on the transmission length L may be by fixing a first threshold X for each transmission length L, and the first threshold X may also be recorded in TDRA. Specific examples of configuring the first threshold are as follows:

The first threshold can be configured in TDRA, as shown in Table 1.

**Table 1**

| Row index | PUSCH mapping type | K₂ | S | L | X |
|---|---|---|---|---|---|
| 1 | Type A | 1 | 0 | 14 | 4 |
| 2 | Type A | 1 | 0 | 12 | 3 |
| 3 | Type A | 1 | 0 | 10 | 3 |
| 4 | Type B | 1 | 2 | 10 | 2 |
| 5 | Type B | 2 | 4 | 10 | 1 |
| 6 | Type B | 2 | 4 | 8 | 1 |
| 7 | Type B | 2 | 4 | 6 | 1 |
| ... | | | | | |

Table 1 provides an illustrative example of PUSCH time domain resource allocation for normal cyclic prefix. In each row, S and L indicate the starting symbol and transmission length of the scheduled PUSCH, PUSCH Mapping Type indicates the mapping type of the dedicated demodulation reference signal (Demodulation Reference Signal, DM-RS), and the K2 parameter indicates the slot offset of the slot where the 1st PUSCH is located relative to the slot where the scheduling DCI is located.

The first threshold can be configured by RRC, and a fixed first threshold X can be configured for each transmission length L of uplink transmissions with different priorities, as shown in Table 2 and Table 3. Table 2 is for high-priority PUSCHs, while Table 3 is for low-priority PUSCHs.

**Table 2**

| | | | | | | | | | | | | | | |
|---|---|---|---|---|---|---|---|---|---|---|---|---|---|---|
| L | 1 | 2 | 3 | 4 | 5 | 6 | 7 | 8 | 9 | 10 | 11 | 12 | 13 | 14 |
| X | 1 | 1 | 1 | 1 | 1 | 1 | 1 | 1 | 1 | 1 | 2 | 2 | 2 | 2 |

**Table 3**

| | | | | | | | | | | | | | | |
|---|---|---|---|---|---|---|---|---|---|---|---|---|---|---|
| L | 1 | 2 | 3 | 4 | 5 | 6 | 7 | 8 | 9 | 10 | 11 | 12 | 13 | 14 |
| X | 1 | 1 | 1 | 1 | 1 | 1 | 1 | 2 | 2 | 3 | 3 | 3 | 4 | 4 |

For slots without uplink/downlink switching and slots with uplink/downlink switching, the corresponding first threshold X is configured, as shown in Tables 4 to 7 below.

**Table 4**

| Symbol index | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| (Symbol index) | | | | | | | | | | | | | | |
| | U | U | U | U | U | U | U | U | U | U | U | U | U | U |

**Table 5**

| Symbol index | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| | **D** | **D** | **D** | **D** | **D** | **D** | **F** | **F** | **U** | **U** | **U** | **U** | **U** | **U** |

**Table 6**

| Symbol index | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| | **D** | **D** | **D** | **D** | **D** | **D** | **D** | **D** | **D** | **F** | **F** | **F** | **U** | **U** |

**Table 7**

| Symbol index | 0 | 1 | 2 | 3 | 4 | 5 | 6 | 7 | 8 | 9 | 10 | 11 | 12 | 13 |
|---|---|---|---|---|---|---|---|---|---|---|---|---|---|---|
| | **D** | **D** | **F** | **F** | **U** | **U** | **U** | **U** | **U** | **U** | **U** | **U** | **U** | **U** |

Table 4 is for uplink slots, and the corresponding first threshold X = 1. Table 5, Table 6, and Table 7 are for slots with uplink/downlink switching. In Table 5, in the corresponding slots, DL:Flexible:LTL = 6:2:6, and the corresponding first threshold X = 7; In Table 6, in the corresponding slots, DL:Flexible:LTL = 9:3:2, and the corresponding first threshold X = 1; In Table 7, in the corresponding slots, DL:Flexible:UL = 2:2:10, and the corresponding first threshold X = 4.

Further, the first threshold is greater than or equal to 0 and less than or equal to 13.

FIG. 4 is a schematic diagram of a slot scheduling scheme according to an embodiment of this application. In FIG. 4, slot 0 (Slot#0) and slot 1 (Slot#1) are configured by using tdd-LTL-DL-ConfigurationCommon and/or tdd-LTL-DL-ConfigurationDedicated. Each slot consists of 14 OFDM symbols, where symbol D represents a symbol for downlink transmission, symbol F represents a flexible symbol, and symbol U represents a symbol for uplink transmission. Based on requirements, symbols corresponding to T1 are configured as SSB, and the symbols corresponding to T2 are indicated by dynamic signaling as not being able to transmit the PUSCH.

Assuming the PUSCH transmission length L is 5 and the first threshold X = 1:

In a case that the first condition includes conditions (1) and (2), it can be determined that in FIG. 4, Slot#0 is an unavailable slot, and slot#1 is an available slot.

In a case that the first condition includes conditions (1), (2), (3), and (4), it can be determined that in FIG. 4, Slot#0 is an unavailable slot, and slot#1 is an unavailable slot.

In a case that the first condition includes conditions (1), (2), (3), and (6), it can be determined that in FIG. 4, Slot#0 is an unavailable slot, and slot#1 is an available slot.

Assuming the PUSCH transmission length L is 6 and the first threshold X = 1:

In a case that the first condition includes conditions (1), (2), (3), and (6), it can be determined that in FIG. 4, Slot#0 is an unavailable slot, and slot#1 is an unavailable slot.

Assuming the PUSCH transmission length L is 6 and the first threshold X = 2:

In a case that the first condition includes conditions (1), (2), (3), and (6), it can be determined that in FIG. 4, Slot#0 is an unavailable slot, and slot#1 is an available slot.

FIG. 5 is a schematic diagram of another slot scheduling scheme according to an embodiment of this application. In FIG. 5, the symbols corresponding to T1 are configured as SSB, and the symbols corresponding to T3 are indicated by dynamic signaling as downlink receiving DL. A measurement gap exists in Slot#0.

Assuming the PUSCH transmission length L is 4 and the first threshold X = 1:

In a case that the first condition includes conditions (1), (2), (3), and (7), and the uplink/downlink switching period is 2 symbols, it can be determined that in FIG. 5, Slot#0 is an unavailable slot, and slot#1 is an unavailable slot.

In a case that the first condition includes conditions (1), (2), (3), and (7), and the uplink/downlink switching period is 1 symbol, it can be determined that in FIG. 5, Slot#0 is an unavailable slot, and slot#1 is an available slot.

Assuming the PUSCH transmission length is 4 and the first threshold X = 2:

In a case that the first condition includes conditions (1), (2), (3), and (7), and the uplink/downlink switching period is 2 symbols, it can be determined that in FIG. 5, Slot#0 is an unavailable slot, and slot#1 is an available slot.

Step S303: Determine an actual transmission behavior in the first slot.

Step S303 can implement the method embodiment of step S202 in FIG. 2 and achieve the same or similar technical effects. For simplicity, details of the same parts are not described herein again.

Therefore, in the uplink transmission method provided in this embodiment of this application, by obtaining the first quantity of symbols that meet the first condition among all the first symbols contained in the first slot, and according to the comparison result of the first quantity and the first threshold, it is determined whether the first slot is available, and then the actual transmission behavior in the first slot is determined, making the judgment of whether the first slot is available more accurate, and the efficiency of uplink transmission effectively improved.

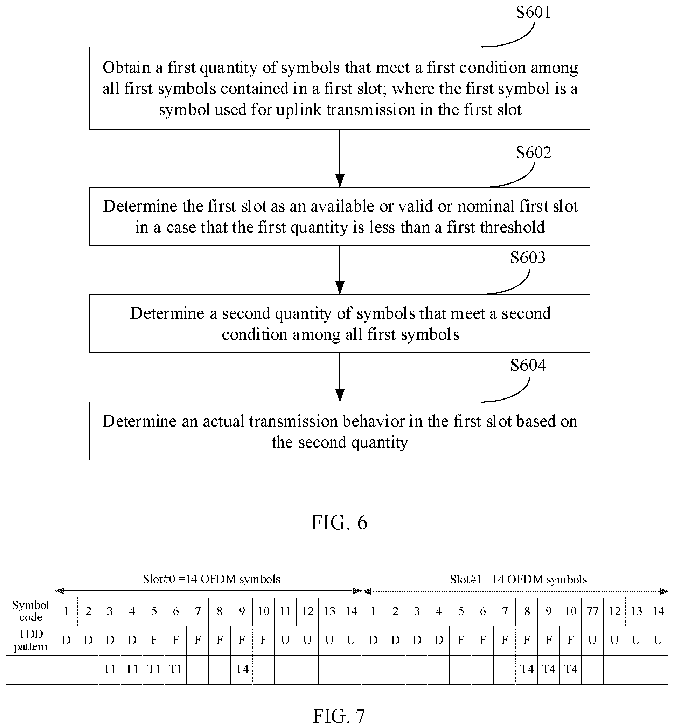

FIG. 6 is another schematic flowchart of an uplink transmission method according to an embodiment of this application. As shown in FIG. 6, the method may include the following steps.

Step S601: Obtain a first quantity of symbols that meet a first condition among all first symbols contained in the first slot.

Step S602: Determine the first slot as an available or valid or nominal first slot in a case that the first quantity is less than a first threshold X.

The steps S601 and S602 can realize the method embodiment of the steps S301 and S302 in FIG. 3, and achieve the same or similar technical effects. For simplicity, details of the same parts are not described herein again.

Step S603: Determine a second quantity Y of symbols that meet a second condition among all first symbols.

The second condition is the first condition excluding the condition of "configured as a semi-static downlink symbol". In other words, if the first condition includes condition (1), the second condition is the first condition without condition (1). If the first condition does not include condition (1), then the second condition is the same as the first condition.

Step S604: Determine an actual transmission behavior in the first slot based on the second quantity Y

Further, the step S604 includes:
the terminal abandons transmission in the first slot in a case that the second quantity is greater than or equal to the first quantity, that is, Y ≥ X.
determine the actual transmission behavior in the first slot in a case that the second quantity is less than the first quantity, that is, Y < X, specifically including at least one of the following:
   performing a target actual transmission behavior in the first slot;
   abandoning transmission in the first slot in a case that the first symbols, excluding invalid symbol resources, of the first slot contain no DMRS;
   performing a target actual transmission behavior based on the second quantity;
   determining based on high-layer configuration that a target actual transmission behavior is to be performed in the first slot; and
   determining an actual transmission behavior on each symbol in the first slot based on processing time; where
   the target actual transmission behavior includes at least one of the following:
      current uplink transmission is performed with rate-matching around invalid symbol resources;
      current uplink transmission is performed by removing or puncturing invalid symbol resources;
      current uplink transmission is performed by segmenting around invalid symbol resources; and
      abandoning transmission in the first slot.

The performing a target actual transmission behavior based on the second quantity includes:
performing transmission in the first slot with rate matching on invalid symbol resources in a case that the second quantity is greater than the third quantity X1 and less than the first quantity, that is, X1 ≤ Y ≤ X; and
performing transmission of uplink transmission with invalid symbol resources removed or punctured in the first slot in a case that the second quantity is less than or equal to the third quantity, that is, Y ≤ X1; where
the third quantity is determined by higher-layer configuration or protocol.

Further, the determining an actual transmission behavior on each symbol in the first slot based on processing time includes at least one of the following:
performing uplink transmission that is rate matched around first symbols which are semi-statically indicated as unavailable or invalid in the first slot; and
performing uplink transmission in the first slot with dynamically indicated unavailable or invalid first symbols removed or punctured.

Further, the determining an actual transmission behavior on each symbol in the first slot based on processing time further includes:
performing uplink transmission that is rate matched around first symbols which are dynamically indicated as unavailable or invalid in the first slot in a case that an interval between a starting symbol j of uplink transmission and a last symbol i where received dynamic signaling resides is greater than or equal to a processing capability value T_process of the terminal, that is, j-i ≥ T_process.
performing uplink transmission in the first slot with dynamically indicated unavailable or invalid first symbols removed or punctured or performing uplink transmission with the dynamically indicated unavailable or invalid first symbols ignored, in a case that an interval between a starting symbol of uplink transmission and a last symbol where received dynamic signaling resides is less than the processing capability value of the terminal, that is, j-i < T_process.

FIG. 7 is a schematic diagram of another slot scheduling scheme according to an embodiment of this application. As shown in FIG. 7, the symbols corresponding to T1 are configured as SSB, and the symbols corresponding to T4 are indicated by dynamic signaling as not being able to transmit PUSCH.

Assuming that the first condition includes conditions (1), (2), and (3), it can be determined that both Slot#0 and slot#1 are available slots.

In the determined available slots, in Slot#1, PUSCH is transmitted in symbols 8 to 13, where symbols 8 and 9 cannot be used for PUSCH transmission, that is, (Y=2) = (X=2), and the terminal abandons PUSCH transmission in slot#1. In Slot#1, PUSCH is transmitted in symbols 8 to 13, where symbol 8 cannot be used for PUSCH transmission, that is, (Y=1) < (X=2), and the terminal can transmit in slot#1.

Therefore, in the uplink transmission method provided in this embodiment of this application, by determining the second quantity of symbols meeting the second condition in all first symbols, the actual transmission behavior in the first slot is determined based on the second quantity, so that the uplink transmission can be flexibly performed in the first slot, and the efficiency of the uplink transmission can be effectively improved.

It should be noted that the uplink transmission method provided in the embodiments of this application may be performed by an uplink transmission apparatus or a control module for performing the uplink transmission method in the uplink transmission apparatus. In this embodiment of this application, the uplink transmission apparatus provided in this embodiment of this application is described by using an example in which the uplink transmission apparatus performs the uplink transmission method.

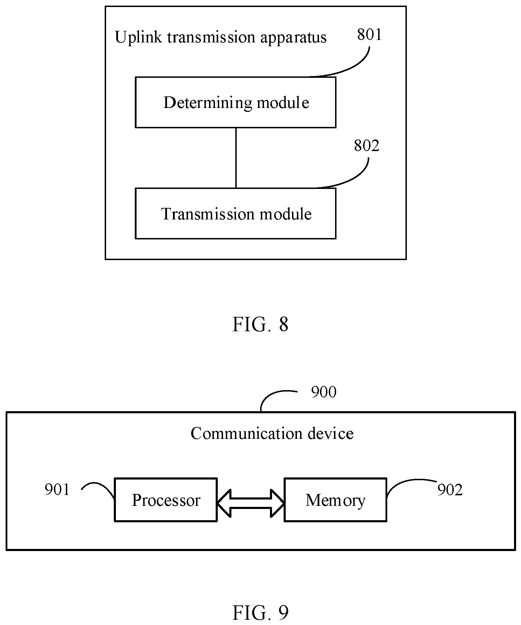

FIG. 8 is a schematic structural diagram of an uplink transmission apparatus according to an embodiment of this application. As shown in FIG. 8, the apparatus includes: a determining module 801 and a transmission module 802.

The determining module 801 is configured to determine an available or valid or nominal first slot for uplink transmission before the 1st symbol of uplink transmission is sent; and the transmission module 802 is configured to determine an actual transmission behavior in the first slot.

Therefore, an uplink transmission apparatus provided in this embodiment of this application, by determining an available or valid or nominal first slot for uplink transmission and then determining an actual transmission behavior in the first slot, can effectively improve the efficiency of uplink transmission.

Based on the above embodiment, further, the judgement module is configured to obtain a first quantity of symbols that meet a first condition among all first symbols contained in the first slot; where the first symbol is a symbol used for uplink transmission in the first slot. In a case that the first quantity is less than a first threshold, the first slot is determined as the available or valid or nominal first slot.

Further, the first symbol includes at least one of the following:
symbol for physical uplink shared channel transmission as indicated by time domain resource allocation;
symbol for uplink transmission as indicated by higher-layer configuration; and
symbol for physical uplink control channel transmission as indicated by physical uplink control channel resource indicator information.

Further, the first threshold is determined by at least one of the following:
higher-layer configuration;
dynamic indication;
transmission length in time domain resource allocation;
transmission length for physical uplink control channel;
transmission length for uplink transmission;
configuration by time domain resource allocation;
configuration by radio resource control information;
the first slot being a slot without uplink/downlink switching;
the first slot being a slot with uplink/downlink switching; and
a coding rate specified by higher-layer configuration and/or protocol.

Further, the first threshold is greater than or equal to 0 and less than or equal to 13.

Further, the first condition includes at least one of the following:
configured as a semi-static downlink symbol;
configured as a synchronization signal block;
used for a control resource set for type 0 physical downlink control channel common search space;
configured as a semi-static flexible symbol;
being a symbol that is unavailable or invalid for uplink transmission according to higher-layer configuration;
being a symbol unusable for current uplink transmission as indicated by dynamic signaling or higher-layer configuration;
current physical uplink shared transmission being interrupted due to a first factor; and
current uplink transmission being canceled according to a half-duplex rule.

Further, the semi-static downlink symbols are configured by tdd-UL-DL-ConfigurationCommon information and/or tdd-UL-DL-ConfigurationDedicated information.

Further, the synchronization signal block is indicated and configured based on ssb-PositionsInBurst in a system information block or ssb-PositionsInBurst in ServingCellConfigCommon.

Further, the control resource set for a type 0 physical downlink control channel common search space is configured by pdcch-ConfigSIB 1 in a master information block.

Further, the semi-static flexible symbol is configured by tdd-UL-DL-ConfigurationCommon information and/or tdd-UL-DL-ConfigurationDedicated information.

Further, the symbol unavailable or invalid for uplink transmission is configured by InvalidSymbolPattern.

Further, the symbol unusable for current uplink transmission includes at least one of the following:
used for scheduling downlink symbol(s);
used for scheduling dynamic flexible symbol(s);
used for scheduling downlink transmission;
used for scheduling repetition of other uplink transmission;
used for scheduling multi-slot transmission of other uplink transmission; and
being an unavailable or invalid symbol.

Further, the symbol unusable for current uplink transmission is indicated by at least one of the following:
dynamic slot format;
downlink control information;
higher-layer configuration; and
uplink cancellation indication.

Further, the repetition of other uplink transmission includes at least one of the following:
physical uplink control channel repetition; where the physical uplink control channel includes: physical uplink control channel for channel state information and/or scheduling request and/or hybrid automatic repeat request;
repetition of target information; where the target information includes message 3 and/or message A; and
repetition of uplink transmission with higher priority than current uplink transmission.

Further, the anmulti-slot transmission of other uplink transmission is TBoMS.

Further, the first factor includes at least one of the following:
a time resource with a scheduling restriction caused by a first measurement;
switching or transition period between uplink and downlink transmission;
radio frequency retuning time between a same or different uplink transmissions;
bandwidth part switching in a current or other cell, activation of a secondary cell, deactivation of a secondary cell, addition of a secondary cell, or release of a secondary cell;
transition between non-discontinuous reception and discontinuous reception in another serving cell; and
measurement gap.

Further, the first measurement is used for at least one of the following: radio link monitoring, connection recovery, radio resource management, and layer 1 reference signal received power.

Further, the radio frequency retuning time between a same or different uplink transmissions is used for at least one of the following:
a change in spatial relation of uplink transmissions in different slots; and
frequency hopping transmission performed by a terminal with limited bandwidth on a bandwidth beyond its maximum bandwidth.

Further, the half-duplex rule includes at least one of the following:
terminal behavior under time division duplex half-duplex carrier aggregation; and
terminal behavior under half-duplex frequency division duplex for reduced capability devices.

Further, the first condition is determined based on at least one of the following:
classification of physical uplink shared channel;
format of physical uplink control channel; and
uplink control information carried by physical uplink control channel.

Therefore, in the uplink transmission apparatus provided in this embodiment of this application, by determining the second quantity of symbols meeting the second condition in all first symbols, the actual transmission behavior in the first slot is determined based on the second quantity, so that the uplink transmission can be flexibly performed in the first slot, and the efficiency of the uplink transmission can be effectively improved.

Based on the above embodiment, further, the transmission module is configured to determine the second quantity of symbols meeting the second condition in all first symbols; and the actual transmission behavior in the first slot is determined based on the second quantity.

Further, the second condition is the first condition excluding "configured as a semi-static downlink symbol".

Further, the determining the actual transmission behavior in the first slot based on the second quantity includes:
abandoning transmission in the first slot in a case that the second quantity is greater than or equal to the first quantity; and
determining the actual transmission behavior in the first slot in a case that the second quantity is less than the first quantity.

Further, determining the actual transmission behavior in the first slot in a case that the second quantity is less than the first quantity includes at least one of the following:
performing a target actual transmission behavior in the first slot;
abandoning transmission in the first slot in a case that the first symbols, excluding invalid symbol resources, of the first slot contain no a demodulation reference signal;
performing a target actual transmission behavior based on the second quantity;
determining based on high-layer configuration that a target actual transmission behavior is to be performed in the first slot; and
determining an actual transmission behavior on each symbol in the first slot based on processing time; where
the target actual transmission behavior includes at least one of the following:
   transmission of current uplink transmission with rate-matching on invalid symbol resources;
   transmission of current uplink transmission with invalid symbol resources removed or punctured;
   segmentation of current uplink transmission by invalid symbol resources; and
   abandoning transmission in the first slot.

Further, the performing a target actual transmission behavior based on the second quantity includes:
performing transmission in the first slot with rate matching on invalid symbol resources in a case that the second quantity is greater than the third quantity and less than the first quantity; and
performing transmission of uplink transmission with invalid symbol resources removed or punctured in the first slot in a case that the second quantity is less than or equal to the third quantity; where
the third quantity is determined by higher-layer configuration or protocol.

Further, the determining an actual transmission behavior on each symbol in the first slot based on processing time includes at least one of the following:
performing rate-matched uplink transmission on semi-statically indicated unavailable or invalid first symbols in the first slot; and
performing uplink transmission in the first slot with dynamically indicated unavailable or invalid first symbols removed or punctured.

Further, the determining an actual transmission behavior on each symbol in the first slot based on processing time further includes:
performing uplink transmission in the first slot with rate matching on dynamically indicated unavailable or invalid first symbols in a case that an interval between a starting symbol of uplink transmission and a last symbol where received dynamic signaling resides is greater than or equal to a processing capability value of the terminal; and
performing uplink transmission in the first slot with dynamically indicated unavailable or invalid first symbols removed or punctured or performing uplink transmission with the dynamically indicated unavailable or invalid first symbols ignored, in a case that an interval between a starting symbol of uplink transmission and a last symbol where received dynamic signaling resides is less than the processing capability value of the terminal.

Therefore, in the uplink transmission apparatus provided in this embodiment of this application, by determining the second quantity of symbols meeting the second condition in all first symbols, the actual transmission behavior in the first slot is determined based on the second quantity, so that the uplink transmission can be flexibly performed in the first slot, and the efficiency of the uplink transmission can be effectively improved.

The uplink transmission apparatus in this embodiment of this application may be an apparatus, or may be a component, integrated circuit, or chip in a terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine or the like, which are not specifically limited in the embodiments of this application.

The uplink transmission apparatus in this embodiment of this application may be an apparatus with an operating system. The operating system may be an android (Android) operating system, may be an iOS operating system, or may be another possible operating system. This is not specifically limited in the embodiments of this application.

The uplink transmission apparatus provided in the embodiments of this application can implement the processes that are implemented in the method embodiments of FIG. 2 and FIG. 7, with the same technical effects achieved. To avoid repetition, details are not described herein again.

Optionally, as shown in FIG. 9, an embodiment of this application further provides a communication device 900, including a processor 901, a memory 902, and a program or an instruction stored in the memory 902 and capable of running on the processor 901. For example, when the communication device 900 is a terminal and when the program or the instruction is executed by the processor 901, the processes of the foregoing embodiment of the uplink transmission method are implemented, with the same technical effects achieved. When the communication device 900 is a network-side device and when the program or the instructions are executed by the processor 901, the processes of the foregoing embodiment of the uplink transmission method are implemented, with the same technical effects achieved. To avoid repetition, details are not described herein again.

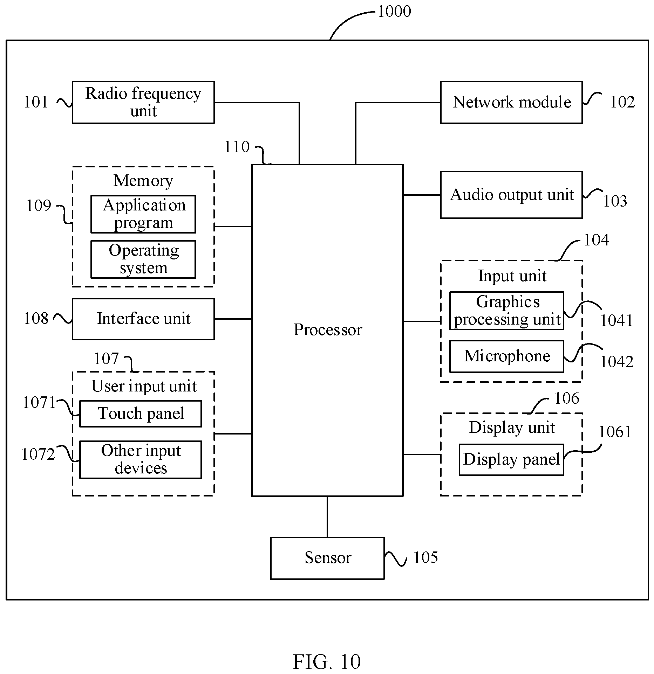

FIG. 10 is a schematic diagram of a hardware structure of a terminal for implementing the embodiments of this application.

The terminal 100 includes but is not limited to components such as a radio frequency unit 101, a network module 102, an audio output unit 103, an input unit 104, a sensor 105, a display unit 106, a user input unit 107, an interface unit 108, a memory 109, and a processor 110.

It can be understood by those skilled in the art that the terminal 100 may further include a power supply (for example, a battery) supplying power to the components. The power supply may be logically connected to the processor 110 via a power management system, so that functions such as charge management, discharge management, and power consumption management are implemented by using the power management system. The structure of the terminal shown in FIG. 10 does not constitute any limitation on the terminal, and the terminal may include more or fewer components than shown in the figure, or combine some of the components, or have different arrangements of the components. Details are not described herein.

It should be understood that in this embodiment of this application, the input unit 104 may include a graphics processing unit (Graphics Processing Unit, GPU) 1041 and a microphone 1042. The graphics processing unit 1041 processes image data of a static picture or a video that is obtained by an image capture apparatus (for example, a camera) in a video capture mode or an image capture mode. The display unit 106 may include a display panel 1061. The display panel 1061 may be configured in a form of a liquid crystal display, an organic light-emitting diode display, or the like. The user input unit 107 includes a touch panel 1071 and other input devices 1072. The touch panel 1071 is also referred to as a touchscreen. The touch panel 1071 may include two parts: a touch detection apparatus and a touch controller. The other input devices 1072 may include but are not limited to a physical keyboard, a functional button (such as a volume control button or a power on/off button), a trackball, a mouse, and a joystick. Details are not described herein.

In this embodiment of this application, the radio frequency unit 101 transmits downlink data received from a network-side device to the processor 110 for processing, and in addition, transmits uplink data to the network-side device. Generally, the radio frequency unit 101 includes but is not limited to an antenna, at least one amplifier, a transceiver, a coupler, a low noise amplifier, a duplexer, and the like.

The memory 109 may be configured to store software programs or instructions and various data. The memory 109 may include a program or instruction storage area and a data storage area. The program or instruction storage area may store an operating system, an application program or instruction required by at least one function (for example, a sound playback function or an image playback function), and the like. Further, the memory 109 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other volatile solid-state storage device.

The processor 110 may include one or more processing units. Optionally, an application processor and a modem processor may be integrated in the processor 110. The application processor primarily processes an operating system, user interfaces, application programs or instructions, and the like. The modem processor primarily processes radio communication, for example, being a baseband processor. It can be understood that the modem processor may alternatively be not integrated in the processor 110.

The processor 110 is configured to determine an available or valid or nominal first slot for uplink transmission before the 1st symbol of uplink transmission is sent; and determine an actual transmission behavior in the first slot.

Through this embodiment of this application, the efficiency of uplink transmission can be effectively improved.

Further, the processor 110 is further configured to obtain a first quantity of symbols that meet a first condition among all first symbols contained in the first slot; where the first symbol is a symbol used for uplink transmission in the first slot. In a case that the first quantity is less than a first threshold, the first slot is determined as the available or valid or nominal first slot.

Further, the first symbol includes at least one of the following:
symbol for physical uplink shared channel transmission as indicated by time domain resource allocation;
symbol for uplink transmission as indicated by higher-layer configuration; and
symbol for physical uplink control channel transmission as indicated by physical uplink control channel resource indicator information.

Further, the first threshold is determined by at least one of the following:
higher-layer configuration;
dynamic indication;
transmission length in time domain resource allocation;
transmission length for physical uplink control channel;
transmission length for uplink transmission;
configuration by time domain resource allocation;
configuration by radio resource control information;
the first slot being a slot without uplink/downlink switching;
the first slot being a slot with uplink/downlink switching; and
a coding rate specified by higher-layer configuration and/or protocol.

Further, the first threshold is greater than or equal to 0 and less than or equal to 13.

Further, the first condition includes at least one of the following:
configured as a semi-static downlink symbol;
configured as a synchronization signal block;
used for a control resource set for type 0 physical downlink control channel common search space;
configured as semi-static flexible symbols;
being a symbol that is unavailable or invalid for uplink transmission according to higher-layer configuration;
being a symbol unusable for current uplink transmission as indicated by dynamic signaling or higher-layer configuration;
current physical uplink shared transmission being interrupted due to a first factor; and
current uplink transmission being canceled according to a half-duplex rule.

Further, the semi-static downlink symbols are configured by a tdd-UL-DL-ConfigurationCommon message and/or a tdd-UL-DL-ConfigurationDedicated message.

Further, the synchronization signal block is indicated and configured based on ssb-PositionsInBurst in a system information block or ssb-PositionsInBurst in ServingCellConfigCommon.

Further, the control resource set for a type 0 physical downlink control channel common search space is configured by pdcch-ConfigSIB 1 in a master information block.

Further, the semi-static flexible symbol is configured by a tdd-UL-DL-ConfigurationCommon message and/or a tdd-UL-DL-ConfigurationDedicated message.

Further, the symbol unavailable or invalid for uplink transmission is configured by InvalidSymbolPattern.

Further, the symbol unusable for current uplink transmission includes at least one of the following:
used for scheduling downlink symbol(s);
used for scheduling dynamic flexible symbol;
used for scheduling downlink transmission;
used for scheduling repetition of other uplink transmission;
used for scheduling multi-slot transmission of other uplink transmission; and
being an unavailable or invalid symbol.

Further, the symbol unusable for current uplink transmission is indicated by at least one of the following:
dynamic slot format;
downlink control information;
higher-layer configuration; and
uplink cancellation indication.

Further, the repetition of other uplink transmission includes at least one of the following:
physical uplink control channel repetition; where the physical uplink control channel includes: physical uplink control channel for channel state information and/or scheduling request and/or hybrid automatic repeat request;
repetition of target information; where the target information includes message 3 and/or message A; and
repetition of uplink transmission with higher priority than current uplink transmission.

Further, the anmulti-slot transmission of other uplink transmission is TBoMS.

Further, the first factor includes at least one of the following:
a time resource with a scheduling restriction caused by a first measurement;
switching or transition period between uplink and downlink transmission;
radio frequency retuning time between a same or different uplink transmissions;
bandwidth part switching in a current or other cell, activation of a secondary cell, deactivation of a secondary cell, addition of a secondary cell, or release of a secondary cell;
transition between non-discontinuous reception and discontinuous reception in another serving cell; and
measurement gap.

Further, the first measurement is used for at least one of the following: radio link monitoring, connection recovery, radio resource management, and layer 1 reference signal received power.

Further, the radio frequency retuning time between a same or different uplink transmissions is used for at least one of the following:
a change in spatial relation of uplink transmissions in different slots; and
frequency hopping transmission performed by a terminal with limited bandwidth on a bandwidth beyond its maximum bandwidth.

Further, the half-duplex rule includes at least one of the following:
terminal behavior under time division duplex half-duplex carrier aggregation; and
terminal behavior under half-duplex frequency division duplex for reduced capability devices.

Further, the first condition is determined based on at least one of the following:
classification of physical uplink shared channel;
format of physical uplink control channel; and
uplink control information carried by physical uplink control channel.

Through this embodiment of this application, uplink transmission can be flexibly performed in the first slot, so that the efficiency of uplink transmission can be effectively improved.

Further, the processor 110 is further configured to determine the second quantity of symbols meeting the second condition in all first symbols; and the actual transmission behavior in the first slot is determined based on the second quantity.

Further, the second condition is the first condition excluding "configured as a semi-static downlink symbol".

Further, the determining the actual transmission behavior in the first slot based on the second quantity includes:
abandoning transmission in the first slot in a case that the second quantity is greater than or equal to the first quantity; and
determining the actual transmission behavior in the first slot in a case that the second quantity is less than the first quantity.

Further, determining the actual transmission behavior in the first slot in a case that the second quantity is less than the first quantity includes at least one of the following:
performing a target actual transmission behavior in the first slot;
abandoning transmission in the first slot in a case that the first symbols, excluding invalid symbol resources, of the first slot contain no demodulation reference signal;
performing a target actual transmission behavior based on the second quantity;
determining the target actual transmission behavior to be performed in the first slot based on high-layer configuration; and
determining an actual transmission behavior on each symbol in the first slot based on processing time; where
the target actual transmission behavior includes at least one of the following:
   transmission of current uplink transmission with rate-matching on invalid symbol resources;
   transmission of current uplink transmission with invalid symbol resources removed or punctured;
   segmentation of current uplink transmission by invalid symbol resources; and
   abandoning transmission in the first slot.

Further, the performing a target actual transmission behavior based on the second quantity includes:
performing transmission in the first slot with rate matching on invalid symbol resources in a case that the second quantity is greater than the third quantity and less than the first quantity; and
performing transmission of uplink transmission with invalid symbol resources removed or punctured in the first slot in a case that the second quantity is less than or equal to the third quantity; where
the third quantity is determined by higher-layer configuration or protocol.

Further, the determining an actual transmission behavior on each symbol in the first slot based on processing time includes at least one of the following:
performing rate-matched uplink transmission on semi-statically indicated unavailable or invalid first symbols in the first slot; and
performing uplink transmission in the first slot with dynamically indicated unavailable or invalid first symbols removed or punctured.

Further, the determining an actual transmission behavior on each symbol in the first slot based on processing time further includes:
performing uplink transmission in the first slot with rate matching on dynamically indicated unavailable or invalid first symbols in a case that an interval between a starting symbol of uplink transmission and a last symbol where received dynamic signaling resides is greater than or equal to a processing capability value of the terminal; and
performing uplink transmission in the first slot with dynamically indicated unavailable or invalid first symbols removed or punctured or performing uplink transmission with the dynamically indicated unavailable or invalid first symbols ignored, in a case that an interval between a starting symbol of uplink transmission and a last symbol where received dynamic signaling resides is less than the processing capability value of the terminal.

Through this embodiment of this application, uplink transmission can be flexibly performed in the first slot, so that the efficiency of uplink transmission can be effectively improved.

An embodiment of this application further provides a readable storage medium. The readable storage medium stores a program or instructions. When the program or instructions are executed by a processor, each process of the foregoing embodiment of the uplink transmission method is implemented, with the same technical effect achieved. To avoid repetition, details are not described herein again.

The processor is a processor in the terminal described in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface. The communication interface is coupled to the processor, and the processor is configured to run a program or an instruction of a network side device to implement the processes of the foregoing uplink transmission method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a... " does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. However, in many cases, the former is a preferred implementation. Based on such an understanding, the technical solutions of this application essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. An uplink transmission method executed by a terminal, comprising:
determining an available or valid or nominal first slot for uplink transmission before the 1st symbol of uplink transmission is sent; and
determining an actual transmission behavior in the first slot.

2. The method according to claim 1, wherein the determining an available or valid or nominal first slot for uplink transmission comprises:
obtaining a first quantity of symbols that meet a first condition among all first symbols contained in the first slot; wherein the first symbol is a symbol used for uplink transmission in the first slot; and
determining the first slot as an available or valid or nominal first slot in a case that the first quantity is less than a first threshold.

3. The method according to claim 2, wherein the first symbol comprises at least one of the following:
symbol for physical uplink shared channel transmission as indicated by time domain resource allocation;
symbol for uplink transmission as indicated by higher-layer configuration; and
symbol for physical uplink control channel transmission as indicated by a physical uplink control channel resource indicator information.

4. The method according to claim 2, wherein the first threshold is determined based on at least one of the following:
higher-layer configuration;
dynamic indication;
transmission length in time domain resource allocation table;
transmission length of physical uplink control channel;
transmission length of uplink transmission;
configuration by time domain resource allocation;
configuration by radio resource control information;
the first slot being a slot without uplink/downlink switching;
the first slot being a slot with uplink/downlink switching; and
a coding rate specified by higher-layer configuration and/or protocol.

5. The method according to claim 2, wherein the first threshold is greater than or equal to 0 and less than or equal to 13.

6. The method according to claim 2, wherein the first condition comprises at least one of the following:
configured as a semi-static downlink symbol;
configured as a synchronization signal block;
used for a control resource set for type 0 physical downlink control channel common search space;
configured as a semi-static flexible symbol;
being a symbol that is unavailable or invalid for uplink transmission according to higher-layer configuration;
being a symbol unusable for current uplink transmission as indicated by dynamic signaling or higher-layer configuration;
current physical uplink shared transmission being interrupted due to a first factor; and
current uplink transmission being canceled according to a half-duplex rule.

7. The method according to claim 6, wherein the semi-static downlink symbols are configured by tdd-LTL-DL-ConfigurationCommon information and/or tdd-LTL-DL-ConfigurationDedicated information.

8. The method according to claim 6, wherein the synchronization signal block is indicated and configured based on ssb-PositionsInBurst in a system information block or ssb-PositionsInBurst in ServingCellConfigCommon.

9. The method according to claim 6, wherein the control resource set for type 0 physical downlink control channel common search space is configured by pdcch-ConfigSIB1 in a master information block.

10. The method according to claim 6, wherein the semi-static flexible symbol is configured by tdd-LTL-DL-ConfigurationCommon information and/or tdd-LTL-DL-ConfigurationDedicated information.

11. The method according to claim 6, wherein the symbol unavailable or invalid for uplink transmission is configured by InvalidSymbolPattern.

12. The method according to claim 6, wherein the symbols unusable for current uplink transmission comprises at least one of the following:
used for scheduling downlink symbol(s);
used for scheduling dynamic flexible symbol;
used for scheduling downlink transmission;
used for scheduling repetition of other uplink transmission;
used for scheduling multi-slot transmission of other uplink transmission; and
being an unavailable or invalid symbol.

13. The method according to claim 12, wherein the symbol unusable for current uplink transmission is indicated by at least one of the following:
dynamic slot format;
downlink control information;
higher-layer configuration; and
uplink cancellation indication.

14. The method according to claim 12, wherein the repetition of other uplink transmission comprises at least one of the following:
physical uplink control channel repetition; wherein the physical uplink control channel comprises: physical uplink control channel for channel state information and/or scheduling request and/or hybrid automatic repeat request;
repetition of target information; wherein the target information comprises message 3 and/or message A; and
repetition of uplink transmission with higher priority than current uplink transmission.

15. The method according to claim 12, wherein the multi-slot transmission of other uplink transmission is TBoMS.

16. The method according to claim 6, wherein the first factor comprises at least one of the following:
a time resource with a scheduling restriction caused by a first measurement;
switching or transition period between uplink and downlink transmission;
radio frequency retuning time between a same or different uplink transmissions;
bandwidth part switching in a current or other cell, activation of a secondary cell, deactivation of a secondary cell, addition of a secondary cell, or release of a secondary cell;
transition between non-discontinuous reception and discontinuous reception in another serving cell; and
measurement gap.

17. The method according to claim 16, wherein the first measurement is used for at least one of the following: radio link monitoring, connection recovery, radio resource management, and layer 1 reference signal received power.

18. The method according to claim 16, wherein the radio frequency retuning time between a same or different uplink transmissions is used for at least one of the following:
a change in spatial relation of uplink transmissions in different slots; and
frequency hopping transmission performed by a terminal with limited bandwidth on a bandwidth beyond its maximum bandwidth.

19. The method according to claim 6, wherein the half-duplex rule comprises at least one of the following:
terminal behavior under time division duplex half-duplex carrier aggregation; and
terminal behavior under half-duplex frequency division duplex for reduced capability devices.

20. The method according to claim 6, wherein the first condition is determined based on at least one of the following:
classification of physical uplink shared channel;
format of physical uplink control channel; and
uplink control information carried by physical uplink control channel.

21. The method according to claim 1, wherein the determining an actual transmission behavior in the first slot comprises:
performing transmission in the first slot or abandoning transmission in the first slot.

22. The method according to claim 2, wherein the determining an actual transmission behavior in the first slot comprises:
determining a second quantity of symbols that meet a second condition among all first symbols; and
determining the actual transmission behavior in the first slot based on the second quantity.

23. The method according to claim 22, wherein the second condition is the first condition excluding configured as a semi-static downlink symbol.

24. The method according to claim 23, wherein the determining the actual transmission behavior in the first slot based on the second quantity comprises:
abandoning transmission in the first slot in a case that the second quantity is greater than or equal to the first quantity; and
determining the actual transmission behavior in the first slot in a case that the second quantity is less than the first quantity.

25. The method according to claim 24, wherein the determining the actual transmission behavior in the first slot in a case that the second quantity is less than the first quantity comprises at least one of the following:
performing a target actual transmission behavior in the first slot;
abandoning transmission in the first slot in a case that the first symbols, excluding invalid symbol resources, of the first slot contains no demodulation reference signal;
performing a target actual transmission behavior based on the second quantity;
determining based on high-layer configuration that a target actual transmission behavior is to be performed in the first slot; and
determining an actual transmission behavior on each symbol in the first slot based on processing time; wherein
the target actual transmission behavior comprises at least one of the following:
current uplink transmission is performed with rate-matching around invalid symbol resources;
current uplink transmission is performed by removing or puncturing invalid symbol resources;
current uplink transmission is performed by segmenting around invalid symbol resources; and
abandoning transmission in the first slot.

26. The method according to claim 25, wherein the performing a target actual transmission behavior based on the second quantity comprises:
performing transmission in the first slot with rate matching on invalid symbol resources in a case that the second quantity is greater than the third quantity and less than the first quantity; and
performing transmission of uplink transmission with invalid symbol resources removed or punctured in the first slot in a case that the second quantity is less than or equal to the third quantity; wherein
the third quantity is determined by higher-layer configuration or protocol.

27. The method according to claim 24, wherein the determining an actual transmission behavior on each symbol in the first slot based on processing time comprises at least one of the following:
performing uplink transmission that is rate matched around first symbols which are semi-statically indicated as unavailable or invalid in the first slot; and
performing uplink transmission that is rate matched around first symbols which are dynamically indicated as unavailable or invalid in the first slot.

28. The method according to claim 27, wherein the determining an actual transmission behavior on each symbol in the first slot based on processing time further comprises:
performing uplink transmission in the first slot with rate matching on dynamically indicated unavailable or invalid first symbols in a case that an interval between a starting symbol of uplink transmission and a last symbol where received dynamic signaling resides is greater than or equal to a processing capability value of the terminal; and
performing uplink transmission in the first slot with dynamically indicated unavailable or invalid first symbols removed or punctured or performing uplink transmission with the dynamically indicated unavailable or invalid first symbols ignored, in a case that an interval between a starting symbol of uplink transmission and a last symbol where received dynamic signaling resides is less than the processing capability value of the terminal.

29. An uplink transmission apparatus, comprising:
a determining module, configured to determine an available or valid or nominal first slot for uplink transmission before the 1st symbol of uplink transmission is sent; and
a transmission module, configured to determine an actual transmission behavior in the first slot.

30. The apparatus according to claim 29, wherein the determining module is configured to:
obtain a first quantity of symbols that meet a first condition among all first symbols contained in the first slot; wherein the first symbol is a symbol used for uplink transmission in the first slot; and
determine the first slot as an available or valid or nominal first slot in a case that the first quantity is less than a first threshold.

31. The apparatus according to claim 30, wherein the first symbol comprises at least one of the following:
symbol for physical uplink shared channel transmission as indicated by time domain resource allocation;
symbol for uplink transmission as indicated by higher-layer configuration; and
symbol for physical uplink control channel transmission as indicated by physical uplink control channel resource indicator information.

32. The apparatus according to claim 30, wherein the first threshold is determined based on at least one of the following:
higher-layer configuration;
dynamic indication;
transmission length in time domain resource allocation;
transmission length for physical uplink control channel;
transmission length for uplink transmission;
configuration by time domain resource allocation;
configuration by radio resource control information;
the first slot being a slot without uplink/downlink switching;
the first slot being a slot with uplink/downlink switching; and
a coding rate specified by higher-layer configuration and/or protocol.

33. The apparatus according to claim 30, wherein the first condition comprises at least one of the following:
configured as a semi-static downlink symbol;
configured as a synchronization signal block;
used for a control resource set for type 0 physical downlink control channel common search space;
configured as a semi-static flexible symbol;
being a symbol unavailable or invalid for uplink transmission according to higher-layer configuration;
being a symbol unusable for current uplink transmission as indicated by dynamic signaling or higher-layer configuration;
current physical uplink shared transmission being interrupted due to a first factor; and
current uplink transmission being canceled according to a half-duplex rule.

34. The apparatus according to claim 33, wherein the semi-static downlink symbols are configured by tdd-UL-DL-ConfigurationCommon information and/or tdd-LTL-DL-ConfigurationDedicated information.

35. The apparatus according to claim 33, wherein the synchronization signal block is indicated and configured based on ssb-PositionsInBurst in a system information block or ssb-PositionsInBurst in ServingCellConfigCommon.

36. The apparatus according to claim 33, wherein the half-duplex rule comprises at least one of the following:
terminal behavior under time division duplex half-duplex carrier aggregation; and
terminal behavior under half-duplex frequency division duplex for reduced capability devices.

37. A terminal, comprising a processor, a memory, and a program or instructions stored in the memory and capable of running on the processor, wherein when the program or instructions are executed by the processor, the steps of the uplink transmission method according to any one of claims 1 to 28 are implemented.

38. A readable storage medium, wherein the readable storage medium stores a program or instructions, and when the program or instructions are executed by a processor, the steps of the uplink transmission method according to any one of claims 1 to 28 are implemented.
